Europäisches Patentamt

European Patent Office

Office européen des brevets

(11) Veröffentlichungsnummer: **0 352 482**

**A1**

(12) **EUROPÄISCHE PATENTANMELDUNG**

(21) Anmeldenummer: **89111545.3**

(22) Anmeldetag: **24.06.89**

(51) Int. Cl.⁴: **F22B 37/04 , C23C 26/02**

(30) Priorität: **27.07.88 DE 3825472**

(43) Veröffentlichungstag der Anmeldung:
**31.01.90 Patentblatt 90/05**

(84) Benannte Vertragsstaaten:
**DE FR GB SE**

(71) Anmelder: **Vereinigte Kesselwerke
Aktiengesellschaft
Postfach 8240 Werdener Strasse 3
D-4000 Düsseldorf 1(DE)**

(72) Erfinder: **Baer, Herbert
Kaiserstrasse 92
D-4150 Krefeld(DE)**

(74) Vertreter: **Planker, Karl-Josef, Dipl.-Phys.
c/o Deutsche Babcock Anlagen AG
Parkstrasse 29 Postfach 4 + 6
D-4150 Krefeld 11(DE)**

(54) **Dampferzeugungsanlage mit Wärmetauscherrohren.**

(57) Problematisch beim Betreiben einer Dampferzeugungsanlage ist der Verschleiß von Wärmetauscherrohren durch aschebeladene Rauchgase oder durch Teilchen einer Wirbelschicht. Maßnahmen wie Schutzelemente, Stampfmassen oder aufgespritzte harte Schichten beeinflussen nachteilig die Eigenschaften der Wärmetauscherrohre bei Druck- und Temperaturwechselbeanspruchung. Die Erfindung soll den Verschleiß ohne diese Nachteile reduzieren.

Die besonders der Erosion ausgesetzten Wärmetauscherrohre (5) oder Teile (7) davon weisen laserwärmebehandelte, harte Oberflächenschichten (10) auf.

Figur 1

EP 0 352 482 A1

## Dampferzeugungsanlage mit Wärmetauscherrohren

Die Erfindung betrifft eine Dampferzeugungsanlage gemäß dem Oberbegriff des Patentanspruchs 1.

Ein Problem beim Betreiben einer Dampferzeugungsanlage ist der Verschleiß von Wärmetauscherrohren. Es tritt verstärkt bei Dampferzeugungsanlagen mit Kohlenstaub- und Wirbelschichtfeuerungen wegen des hohen Ascheanteils der Rauchgase auf. Speziell durch den im Rauchgas enthaltenen Quarzsand wird die Erosion der Wärmetauscherrohre von Bündelheizflächen und Umfassungswänden gefördert. Wärmetauscherrohre in oder in der Umgebung einer Wirbelschicht sind ebenfalls einer starken Erosion ausgesetzt.

Das besondere Problem dieser Wärmetauscherrohre ist, daß sie durch ständige Temperatur- und Druckwechsel Dehnungen ausgesetzt sind. Aus diesem Grund werden zähe Stähle mit geringem Kohlenstoffanteil eingesetzt.

Zum Schutz solcher Wärmetauscherrohre ist es bekannt, sie durch thermische Spritzverfahren, zum Beispiel durch Plasmaspritzen, mit einer harten Oberfläche zu versehen.

Das thermische Aufspritzen von Schutzschichten führt meist zu Poren in der Oberfläche, die besonders dem abrasiven Quarzsand als neue Angriffsflächen dienen.

Darüber hinaus haben diese Schichten meist völlig andere Ausdehnungskoeffizienten als das Grundmaterial, so daß entweder nur sehr dünne und unwirksame Schichten aufgespritzt werden oder die Schichten nach kurzer Betriebszeit abplatzen.

Es ist außerdem bekannt, an besonders erosionsgefährdeten Stellen die Wärmetauscherrohre mit Schutzelementen oder Schutzmassen zu versehen. Derartige Schutzmaßnahmen für die Wärmetauscherrohre von Tauchheizflächen einer Wirbelschichtfeuerung sind in der DE-OS 33 47 083 beschrieben. Bei einem der Ausführungsbeispiele sind an waagerechte Rohre zu beiden Seiten hochkantstehende Leisten angeschweißt; bei einem anderen Ausführungsbeispiel sind die Rohre in erosionsbeständige Stampfmassen eingebettet.

In speziellen Bereichen des Maschinen- oder Werkzeugbaus ist es bekannt, besonders verschleißfeste Oberflächen durch Laserstrahlwärmebehandlungen, wie Oberflächenhärten oder Oberflächenlegieren, herzustellen. Mit Hilfe von Lasern werden zum Beispiel, wie in der DE-PS 33 43 783 beschrieben, Zylinderlaufflächen bearbeitet oder, wie von J. Watanabe et al. (Preprint: Second International Conference on Surface Engineering, Stratford-upon-Avon, 15 - 18. June 1987) beschrieben, Rohre mit einer harten Oberfläche versehen.

Eine Anlage zur Laserstrahlwärmebehandlung ist zum Beispiel in der DE-PS 29 08 195 beschrieben.

Aufgabe der Erfindung ist, eine Dampferzeugungsanlage zu entwickeln, in der der Verschleiß der Wärmetauscherrohre ohne wesentliche Beeinflussung der Eigenschaften, wie die Wärmeübertragung oder die Warmfestigkeit, reduziert ist.

Die Aufgabe wird erfindungsgemäß durch die kennzeichnenden Merkmale des Patentanspruchs 1 gelöst.

Durch gezielten Oberflächenschutz in Form von laserwärmebehandelten, harten Oberflächen der der Erosion besonders ausgesetzten Wärmetauscherrohre, wird ihr Verschleiß erheblich reduziert.

Der Aufwand durch Schutzelemente oder die auf die Wärmeübertragung nachteilige Wirkung einer Stampfmasse entfällt. Außerdem bilden diese Oberflächenschichten einen guten Korrosionsschutz, der besonders bei reduzierender Atmosphäre von Vorteil ist.

Die besonderen Vorteile einer durch Laserwärmebehandlung erzeugten Oberflächenschicht sind:
- eine glatte, porenfreie Oberfläche ohne Angriffstellen für den abrasiven Quarzsand,
- ein homogenes, feinkörniges Gefüge erhöhter Härte,
- eine wählbare Einhärttiefe,
- keine wesentliche Veränderung der Wärme- und Festigkeitseigenschaften bei Temperatur- und Druckwechselbeanspruchung
- keine Rißbildung und
- ein porenfreier Übergang zum Grundmaterial.

Vorteil der Merkmale der Ansprüche 2, 3 und 4 ist, daß die der Erosion durch die Rauchgasströmung besonders ausgesetzten Wärmetauscherrohre oder Teile davon auf ihrer gesamten Oberfläche oder partiell durch laserwärmebehandelte Oberflächen vor Verschleiß geschützt sind. Der Rauchgasströmung besonders ausgesetzt sind Wärmetauscherrohre von Heizflächen im Rauchgaszug, speziell die zuerst angeströmten Wärmetauscherrohre der Rohrbündel, insbesondere des zuerst angeströmten Rohrbündels. Bei den Heizflächen im Rauchgaszug kann es sich um Vorwärmer-, Verdampfer-oder Überhitzerheizflächen handeln. Die Merkmale der Ansprüche 2, 3 und 4 sind sowohl für Kohlenstaubfeuerungen, bei denen die Rauchgasströmung mit hoher Geschwindigkeit und niedriger Ascheladung auf die Heizflächen trifft, als auch für Wirbelschichtfeuerungen, bei denen die Rauchgasgeschwindigkeit niedriger, die Ascheladung dagegen höher als bei den Kohlenstaubfeuerungen ist, geeignet. Der besondere Vorteil des Merkmals des Anspruchs 3 ist, daß durch die partiell angebrachten laserwärmebehandelten Oberflächenschichten der Verschleiß verringert wird, ohne daß Verzug auftritt.

Vorteil der Merkmale der Ansprüche 5 und 6 ist, daß die der Erosion durch die Wirbelschicht und der Korrosion durch die reduzierende Atmosphäre in der Wirbelschicht besonders ausgesetzten Wärmetauscherrohre der Umfassungswände im Bereich der Wirbelschicht und die der Tauchheizflächen der Wirbelschicht durch laserwärmebehandelte, harte Oberflächen vor Verschleiß geschützt sind.

Vorteil des Merkmals des Anspruchs 7 ist, daß die der Erosion durch heiße Asche ausgesetzten Wärmetauscherrohre eines Wirbelbettkühlers durch laserwärmebehandelte, harte Oberflächen vor Verschleiß geschützt sind.

Das Merkmal des Anspruchs 8 ist besonders für Wärmetauscherrohre, deren Verschleiß mäßig ist, geeignet. Eine durch Laseraufschmelzen und Selbstabschreckung entstandene Oberflächenschicht verfügt über ein feinkörniges Gefüge erhöhter Härte und erhöhter Verschleißfestigkeit. Sie ist kostengünstig und schnell zu fertigen. Mit einer derartigen Oberflächenschicht versehene Wärmetauscherrohre sind ohne Rißbildung kaltverformbar.

Das Merkmal des Anspruchs 9 ist besonders für Wärmetauscherrohre, die aus warmfesten oder hochwarmfesten Stählen für den Kesselbau, insbesondere aus 13 Cr Mo 44, bestehen, geeignet. Bei einer Einschmelztiefe 200 bis 1500 μm, insbesondere von 300 bis 600 μm sind die Oberflächenschichten besonders homogen, poren- und rißfrei und weisen ein feinkörniges, zellulares Gefüge auf. Die anhand von Gleitverschleißexperimenten ermittelten Verschleißraten dieser Oberflächenschichten sind etwa halb so groß wie die des unbehandelten Grundmaterials.

Vorteil des Merkmals des Anspruchs 10 ist, daß die Härte und die Verschleißfestigkeit der Oberflächenschichten durch die härtenden Bestandteile weiter erhöht sind. Diese Oberflächenschichten bilden einen noch besseren Erosions- und Korrosionsschutz. Die härtenden Bestandteile werden beim Laserlegieren fein in dem aufgeschmolzenen Grundmaterial verteilt. Die Wahl der härtenden Bestandteile unterliegt keiner Beschränkung durch unterschiedliche Wärmedehnung von Hartwerkstoff und Grundmaterial.

Das Merkmal des Anspruchs 11 ist besonders für dünnere Oberflächenschichten geeignet. Da die härtenden Bestandteile während des Laseraufschmelzens zugeführt werden und dadurch nur ein Arbeitsgang notwendig ist, sind diese Oberflächenschichten kostengünstig herzustellen.

Das Merkmal des Anspruchs 12 ist besonders für dickere Oberflächenschichten und Schichtaufbauten mit unterschiedlichen Härten, zum Beispiel mit am Umfang veränderlicher Härte, geeignet. Diese Oberflächenschichten sind außerdem homogen, weil eingeschmolzene metallische, härtende Bestandteile teilweise aufgeschmolzen und besonders fein verteilt sind. Ein Aufmischungsgrad von 30 bis 75 % führt zu Oberflächenschichten, die große Härte und Verschleißfestigkeit bei guter Temperatur- und Druckwechselbeanspruchbarkeit aufweisen. Der Aufmischungsgrad A ist als Differenz zwischen Gesamtdicke d der Oberflächenschicht nach dem Aufschmelzen und der Dicke $d_h$ der Hartwerkstoffschicht bezogen auf die Gesamtdicke d definiert:

$A = (d - d_h)/d$.

Das Merkmal des Anspruchs 13 ist besonders für Wärmetauscher aus warmfesten oder hochwarmfesten Stählen, insbesondere für den Kesselbau, insbesondere aus 13 Cr Mo 44, geeignet.

Vorteil des Merkmals des Anspruchs 14 ist, daß die Oberflächenschichten besonders homogen, poren- und rißfrei sind und ein feinkörniges, dendritisches Gefüge mit vereinzelten, kleineren WC-Teilchen aufweisen. Die Verschleißraten dieser harten Oberflächenschichten betragen nur etwa 2 % der des unbehandelten Grundmaterials.

Vorteil des Merkmals des Anspruchs 15 ist eine weitere Erhöhung der Härte und der Verschleißfestigkeit der Oberflächenschichten.

Die Zeichnung dient zur Erläuterung der Erfindung anhand schematisch dargestellter Ausführungsbeispiele.

Figur 1 zeigt einen Schnitt durch eine Kohlenstaubfeuerung (Beispiel 1) mit einem vergrößerten Ausschnitt aus den Heizflächen.

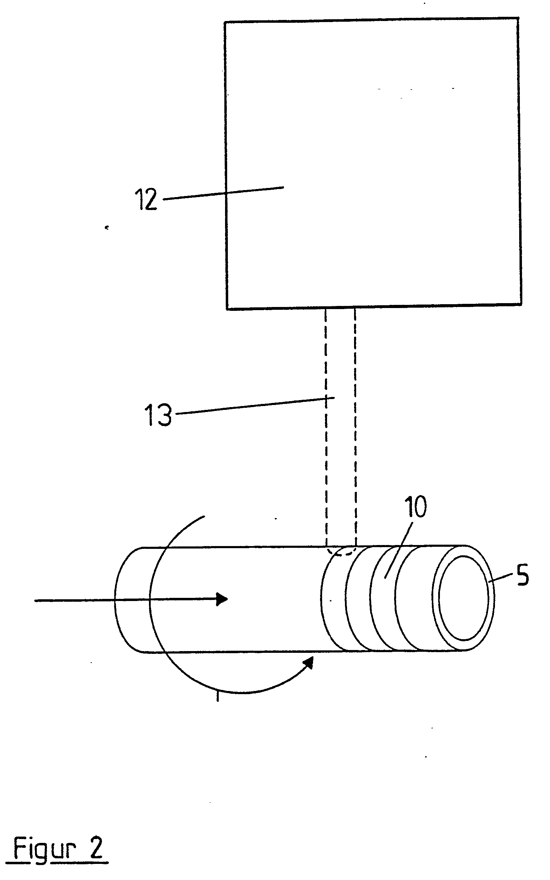

In Figur 2 ist eine Anlage zum Laserbehandeln von Wärmetauscherrohren skizziert.

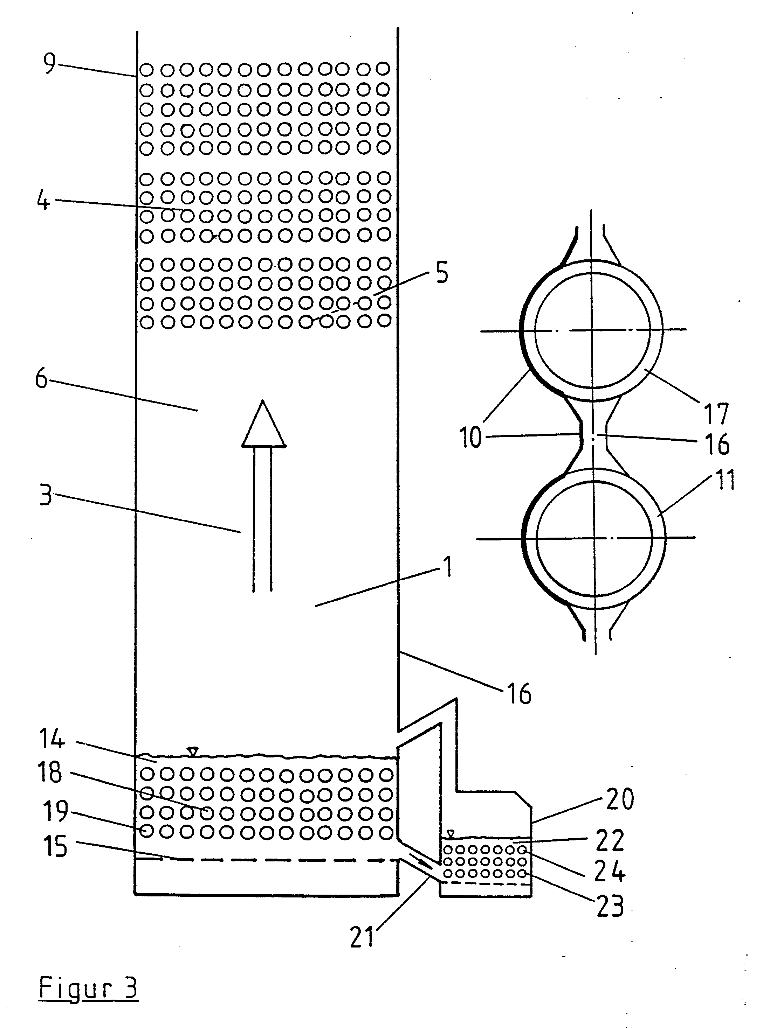

Figur 3 zeigt einen Schnitt durch eine Wirbelschichtfeuerung (Beispiel 2) mit einem vergrößerten Ausschnitt aus der Umfassungswand und einem Wirbelbettkühler.

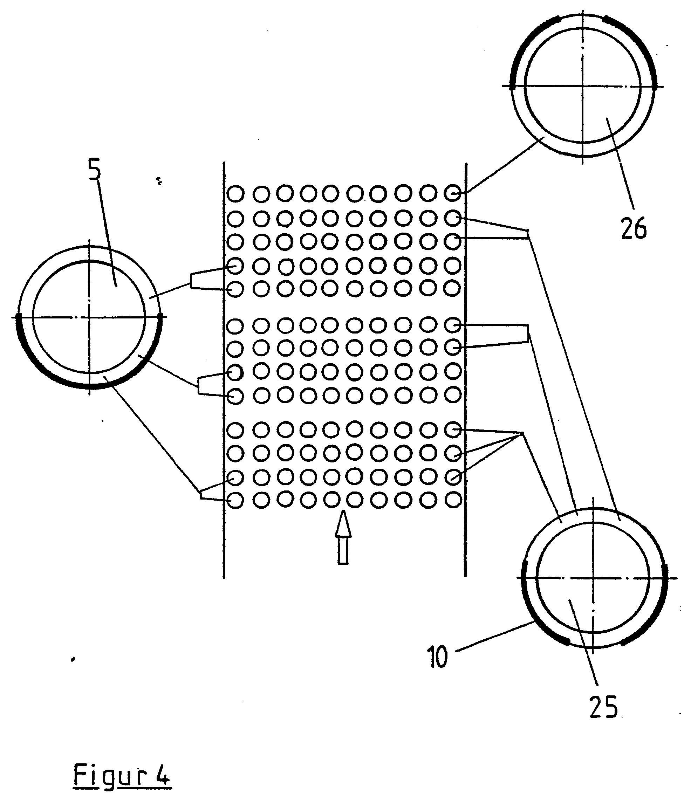

Figur 4 zeigt Wärmetauscherrohre von Heizflächen einer Kohlenstaubfeuerung (Beispiel 3), die partiell Oberflächenschichten aufweisen.

Beispiel 1: Dampferzeugungsanlage mit Kohlenstaubfeuerung

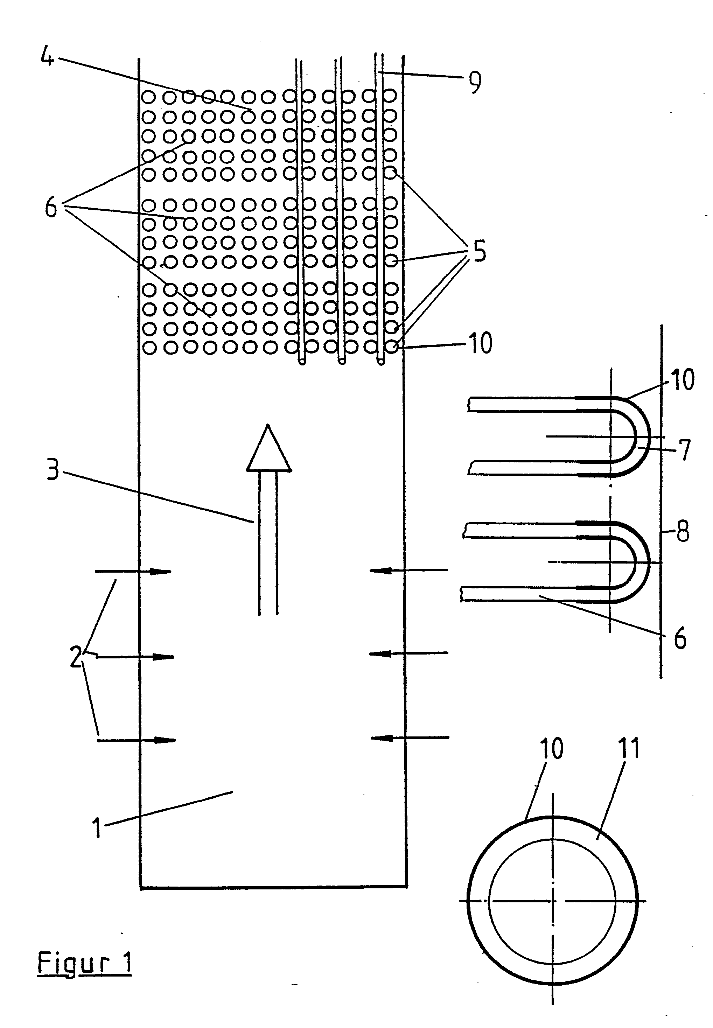

Im Feuerraum 1 einer Dampferzeugungsanlage mit Kohlenstaubfeuerung sind drei Brennerebenen mit je vier Brennern 2, von denen jeweils zwei pro Brennerebene in Figur 1 durch waagerechte Pfeile symbolisiert sind, übereinander angeordnet. Die Richtung der Rauchgasströmung ist durch einen senkrechten Pfeil 3 angegeben.

Im oberen Teil des Feuerraumes 1 befinden sich oberhalb der Brenner 2 Heizflächen 4, die der heißen, aschebeladenen Rauchgasströmung ausgesetzt sind. Untere Wärmetauscherrohre 5 von drei übereinanderliegenden Rohrbündeln 6, Rohrbögen 7 im Bereich der Feuerraumwand 8, sowie Teile der Tragrohre 9 der Heizflächen 4 sind mit durch Laserumschmelzen erzeugten, harten Oberflächenschichten 10 versehen.

Die Einschmelztiefe der Oberflächenschichten 10 in das aus 13 Cr Mo 44 bestehende Grundmaterial 11 beträgt etwa 350 $\mu$m (etwa 6 % der Rohrwanddicke). Die Oberflächenschichten 10 sind poren- und rißfrei, haben ein feinkörniges, zellulares Gefüge und weisen poren- und rißfreie Verbindungen mit dem Grundmaterial 11 auf.

Die Oberflächenschichten 10 der Wärmetauscherrohre, zum Beispiel der unteren Wärmetauscherrohre 5 der Rohrbündel 6, sind mit einem feststehenden Hochleistungs-$CO_2$-Laser ($\geqq$ 5 kW) 12 durch dessen Laserstrahl 13 auf rotierenden und transversal bewegten Wärmetauscherrohren 5 erzeugt worden.

Im Betrieb strömen Rauchgase in Richtung des Pfeils 3 von unten nach oben durch den Feuerraum 1. Mitgerissene Ascheteilchen treffen auf die Heizflächen 4. Die der Rauchgasströmung besonders ausgesetzten unteren Wärmetauscherrohre 5 der Rohrbündel 6, insbesondere die des unteren Rohrbündels 6, an denen außerdem aufgewirbelte, schwere Teilchen abprallen, sowie Rohrbögen 7 und Teile der Tragrohre 9 sind durch die durch Laserumschmelzen erzeugten Oberflächenschichten 10 vor Verschleiß geschützt.   .

Beispiel 2: Dampferzeugungsanlage mit Wirbelschichtfeuerung

In der unteren Hälfte eines Feuerraumes 1 einer Dampferzeugungsanlage mit Wirbelschichtfeuerung befindet sich eine aus körnigem Material bestehende Wirbelschicht 14, die nach unten durch einen perforierten Zwischenboden 15 von einer Luftkammer abgetrennt ist.

Im Bereich der Wirbelschicht 14 sind Umfassungswände 16 des Feuerraums 1 mit oberflächenbeschichteten Wärmetauscherrohren 17 versehen.

Eingetaucht in die Wirbelschicht 14 sind Tauchheizflächen 18 in Gestalt von Rohrtafeln, die jeweils aus mehreren waagerechten Wärmetauscherrohren 19, deren Achsen in einer senkrecht stehenden Ebene liegen, bestehen. Die Wärmetauscherrohre 19 der Tauchheizflächen 18 sind ebenfalls oberflächenbeschichtet.

In einem Wirbelbettkühler 20, der über einen Aschekanal 21 an die Wirbelschicht 14 kurz oberhalb des Zwischenbodens 15 angeschlossen ist, befindet sich ein aus Asche bestehendes Wirbelbett 22, in das oberflächenbeschichtete Wärmetauscherrohre 23 in Form von Heizflächen 24 eintauchen.

Die Oberflächenschichten 10 der Wärmetauscherrohre 17 und 19 in und in der Umgebung der Wirbelschicht 14 der Wirbelschichtfeuerung und die Wärmetauscherrohre 23 im Wirbelbett 22 des Wirbelbettkühlers 20 sind durch den Laser 12 eingeschmolzene, durch Plasmaspritzen aufgebrachte Beschichtungen 10 aus WC-Teilchen in einer Co-Matrix.

Die Schichtdicke der Beschichtungen beträgt etwa 100 $\mu$m (etwa 2 % der Rohrwanddicke) und die Einschmelztiefe der Oberflächenschichten 10 etwa das Dreifache der Schichtdicke: 300 $\mu$m. Der Aufmischungsgrad beträgt dabei 67 %. Die Oberflächenschichten 10 sind poren- und rißfrei, haben ein feinkörniges, dendritisches Gefüge mit nur vereinzelten WC-Teilchen und weisen poren- und rißfreie Verbindungen mit dem Grundmaterial 11 auf.

Im oberen Teil des Feuerraumes 1 befinden sich Heizflächen 4, die ebenso wie die der Kohlenstaubfeuerung des Beispiels 1 ausgebildet sind.

Im Betrieb werden die Wirbelschicht 14 im Feuerraum 1 und das Wirbelbett 22 des Wirbelbettkühlers 20 in fluidisiertem Zustand gehalten. Die dem Aufprall der Teilchen des Wirbelschichtmaterials bzw. der Asche besonders ausgesetzten Wärmetauscherrohre 17, 19 und 23 sind durch die durch Laserlegieren erzeugten Oberflächenschichten 10 vor Verschleiß geschützt.

Beispiel 3: Dampferzeugungsanlage mit partiell oberflächenbeschichteten Wärmetauscherrohren

Die Dampferzeugungsanlage des Beispiels 3 unterscheidet sich von der des Beispiels 2 darin, daß Wärmetauscherrohre 5, 25, 26 der drei übereinanderliegenden Rohrbündel 6 der Heizflächen 4 partiell mit durch Laserlegieren hergestellten Oberflächenschichten 10 versehen sind.

Zwei Reihen unterer Wärmetauscherrohre 5 eines jeden Rohrbündels 6 sind auf ihren unteren Hälften und darüberliegende Reihen von Wärmetauscherrohren 25, 26 an ihren Seiten mit durch Laserlegieren hergestellten Oberflächenschichten 10 versehen. Die Oberflächenschichten 10 der Wärmetauscherrohre 25 der oberen Reihen erstrecken sich von den Seiten bis in die untere Hälfte der Wärmetauscherrohre 25.

Dies gilt nicht für die Wärmetauscherrohre 26 der oberen Reihe des oberen Rohrbündels 6; die Oberflächenschichten 10 dieser Wärmetauscherrohre 26 erstrecken sich von den Seiten bis in die obere Hälfte der Wärmetauscherrohre 26. Die partiell angebrachten Oberflächenschichten 10 der Wärmetauscherrohre 5, 25, 26 entsprechen den im Beispiel 2 beschriebenen Oberflächenschichten 10 der Wärmetauscherrohre 19 in der Wirbelschicht 14.

Im Betrieb sind die der Rauchgasströmung besonders ausgesetzten Oberflächen der Wärmetauscherrohre 5, 25, 26 der Heizflächen 4 durch die durch Laserlegieren hergestellten Oberflächenschichten 10 vor Verschleiß geschützt.

## Ansprüche

1. Dampferzeugungsanlage, insbesondere mit einer Kohlenstaub- oder einer Wirbelschichtfeuerung, mit Wärmetauscherrohren, die mit Oberflächenschutz versehen sind, dadurch gekennzeichnet, daß besonders der Erosion ausgesetzte Wärmetauscherrohre (5, 17, 19, 23, 25, 26) oder Teile (7) davon laserwärmebehandelte, harte Oberflächenschichten (10) aufweisen.

2. Dampferzeugungsanlage nach Anspruch 1, dadurch gekennzeichnet, daß die Wärmetauscherrohre (5) von Heizflächen (4) in einem Rauchgaszug, insbesondere stromaufwärts angeordnete Wärmetauscherrohre (5) von Rohrbündeln (6), insbesondere von stromaufwärts angeordneten Rohrbündeln (6), laserwärmebehandelte, harte Oberflächenschichten (10) aufweisen.

3. Dampferzeugungsanlage nach Anspruch 1 oder 2, dadurch gekennzeichnet, daß
- die Wärmetauscherrohre (5, 25, 26) der Heizflächen (4) im Rauchgaszug partiell mit laserwärmebehandelten, harten Oberflächenschichten (10) versehen sind, insbesondere, daß
- stromaufwärts angeordnete Wärmetauscherrohre (5) der Rohrbündel (6) die Oberflächenschichten (10) auf ihren Anströmseiten
- und stromabwärts angeordnete Wärmetauscherrohre (25, 26) der Rohrbündel (6) die Oberflächenschichten (10) an ihren Seiten aufweisen.

4. Dampferzeugungsanlage nach einem der Ansprüche 1 bis 3, dadurch gekennzeichnet, daß die Rohrbögen (7) der Heizflächen (4) im Rauchgaszug im Bereich einer Feuerraumwand (8) laserwärmebehandelte, harte Oberflächenschichten (10) aufweisen.

5. Dampferzeugungsanlage mit einer Wirbelschichtfeuerung nach einem der Ansprüche 1 bis 4, dadurch gekennzeichnet, daß die Wärmetauscherrohre (17) von Umfassungswänden (16) im Bereich einer Wirbelschicht (14) laserwärmebehandelte, harte Oberflächenschichten (10) aufweisen.

6. Dampferzeugungsanlage mit einer Wirbelschichtfeuerung nach einem der Ansprüche 1 bis 5, dadurch gekennzeichnet, daß die Wärmetauscherrohre (19) von Tauchheizflächen (18) der Wirbelschicht (14) laserwärmebehandelte, harte Oberflächenschichten (10) aufweisen.

7. Dampferzeugungsanlage mit einer Wirbelschichtfeuerung nach einem der Ansprüche 1 bis 6, dadurch gekennzeichnet, daß die Wärmetauscherrohre (23) eines Wirbelbettkühlers (20) laserwärmebehandelte, harte Oberflächenschichten (10) aufweisen.

8. Dampferzeugungsanlage nach einem der Ansprüche 1 bis 7, dadurch gekennzeichnet, daß die Oberflächenschichten (10) durch Laserumschmelzen erzeugte, homogene, feinkörnige Schichten sind.

9. Dampferzeugungsanlage nach Anspruch 8, dadurch gekennzeichnet, daß die Oberflächenschichten (10) eine Einschmelztiefe von 200 bis 1500 $\mu$m, insbesondere von 300 bis 600 $\mu$m, haben.

10. Dampferzeugungsanlage nach einem der Ansprüche 1 bis 7, dadurch gekennzeichnet, daß die Oberflächenschichten (10) aus durch Lasergaslegieren oder Festphasen-Laserlegieren hergestellten Schichten, die härtende Bestandteile aus Hartlegierungen, Hartmetallen, Cermets, keramischen Werkstoffen oder Oxiden enthalten, bestehen.

11. Dampferzeugungsanlage nach Anspruch 10, dadurch gekennzeichnet, daß die Oberflächenschichten (10) beim Laseraufschmelzen in Pulverform zugeführte harte Bestandteile aus Hartlegierungen, Hartmetallen, Cermets, keramischen Werkstoffen oder Oxiden aufweisen.

12. Dampferzeugungsanlage nach Anspruch 10, dadurch gekennzeichnet, daß die Oberflächenschichten (10) eine durch ein thermisches Spritzverfahren aufgebrachte und durch einen Laser (12) eingeschmolzene harte Beschichtung mit intermetallischen Verbindungen, Hartmetallen oder Keramik und einen Aufmischungsgrad von 30 bis 75 % aufweisen.

13. Dampferzeugungsanlage nach Anspruch 12, dadurch gekennzeichnet, daß die Oberflächenschichten (10) eine durch Plasmaspritzen aufgebrachte und durch den Laser (12) eingeschmolzene Beschichtung aus Wolframkarbid (WC)-Teilchen in einer Kobalt (Co)-Matrix aufweisen.

14. Dampferzeugungsanlage nach Anspruch 13, dadurch gekennzeichnet, daß die aufgebrachte WC-Co-Beschichtung eine Schichtdicke von 50 bis 500 $\mu$m, insbesondere von 50 bis 300 $\mu$m, hat.

15. Dampferzeugungsanlage nach Anspruch 1 bis 7, dadurch gekennzeichnet, daß die Oberflächenschichten (10) aus durch Laserbehandlung mit Grundmaterial (11) verbundenen, harten Schichten aus Hartlegierungen, Hartmetallen, Cermets, keramischen Werkstoffen oder Oxiden bestehen.

Figur 1

EP 0 352 482 A1

12

13

10

5

Figur 2

<u>Figur 3</u>

Figur 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3412664 (KRAFTWERK UNION)<br>* das ganze Dokument * | 1, 8-12,<br>15 | F22B37/04<br>C23C26/02 |
| Y | FR-A-2307214 (EUTECTIC CORPORATION)<br>* Seite 1, Zeilen 1 - 22 *<br>* Seite 2, Zeile 40 - Seite 4, Zeile 7 *<br>* Seite 5, Zeilen 14 - 23 *<br>* Seite 6, Zeilen 10 - 23; Figuren 1-6 * | 1, 2, 5,<br>8-15 | |
| Y,D | I.A.Bucklow:Second International Conference on SURFACE ENGINEERING"1987 THE WELDING INSTITUTE, Cambridge,Great Britain<br>Watanabe et al."Surface processing with a high power $CO_2$ laser"Seiten 131-140 | 1, 2, 5,<br>8-15 | |
| A | DE-A-3428696 (ISHIKAWAJIMA-HARIMA JUKOGYO)<br>* Zusammenfassung; Figuren 1-14 * | 3, 4, 6 | |
| A | NL-C-69554 (COMPAGNIE DES SURCHAUFFEURS)<br>* das ganze Dokument * | 4 | RECHERCHIERTE SACHGEBIETE (Int. Cl.5 ) |
| 8 | US-A-4685427 (TASSEN)<br>* Zusammenfassung * | 5 | F22B<br>F28F<br>C23C |
| A | PATENT ABSTRACTS OF JAPAN<br>vol. 9, no. 233 (C-304)(1956) 19 September 85,<br>& JP-A-60 92461 (KOGYO GIJUTSUIN) 24 Mai 85,<br>* das ganze Dokument * | 13 | |
| A | FR-A-2409324 (SKODA NARODNI PODNIK) | | |
| P,X | DD-A-260321 (BERGMANN-BORSIG)<br>* Seite 2; Figur * | 1, 5, 6,<br>8 | |

Der vorliegende Recherchenbericht wurde für alle Patentansprüche erstellt

| Recherchenort | Abschlußdatum der Recherche | Prüfer |
|---|---|---|
| DEN HAAG | 02 NOVEMBER 1989 | VAN GHEEL J.U.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................

& : Mitglied der gleichen Patentfamilie, übereinstimmendes Dokument

EPO FORM 1503 03.82 (P0403)